# EUROPÄISCHE PATENTSCHRIFT

(11) **EP 2 423 019 B1**
(45) Veröffentlichungstag und Bekanntmachung des Hinweises auf die Patenterteilung: **26.08.2015**
(21) Anmeldenummer: 11006177.7
(22) Anmeldetag: 27.07.2011
(51) Int. Cl.: B60H 1/34

(54) **Ausströmdüse und Luftverteilungsvorrichtung**
Dispenser nozzle and air distribution device
Buse d'écoulement et dispositif de distribution d'air

(30) Priorität: 25.08.2010 DE 102010035406
(43) Veröffentlichungstag der Anmeldung: 29.02.2012
(73) Patentinhaber: Truma Gerätetechnik GmbH & Co. KG, 85640 Putzbrunn (DE)
(72) Erfinder: Laging, Johannes, 81829 München (DE); Listl, Hans-Jürgen, 85652 Pliening (DE); Kahl, Wolfgang, 8o933 München (DE)
(74) Vertreter: Prinz & Partner mbB

(56) Entgegenhaltungen:
- EP-A1- 1 132 232
- EP-A1- 1 634 740
- EP-A1- 2 039 544
- EP-A2- 1 243 450
- DE-A1- 10 056 955
- DE-U1-202007 014 076
- FR-A1- 2 912 085

## Beschreibung

Die Erfindung betrifft eine Ausströmdüse und eine Luftverteilungsvorrichtung unter Verwendung der Ausströmdüse. Die Erfindung betrifft insbesondere auch eine Ausströmdüse zur individuellen Einstellung einer Luftstromrichtung und der Streuung eines Hauptluftstroms bei Luftstromverteilungsvorrichtungen.

Bei Ausströmdüsen bzw. Luftstromverteilungsvorrichtungen, z.B. in Zusammenhang mit Dachklimaanlagen für Fahrzeuge und dergleichen, werden zur Ausgabe des Luftstroms häufig bestimmte Gehäuseaußenteile mit Lamellenstrukturen versehen, die durch entsprechende, ebenfalls außen vorgesehene Mechanismen in einem Anstellwinkel eingestellt werden können, um eine Richtung des Luftstroms zu steuern oder den Luftaustritt zu dosieren, insbesondere zu verschließen.

Dabei ist problematisch, dass je nach Anzahl und Ausgestaltung von Austrittsöffnungen auch entsprechend komplexe Strukturen vorgesehen sein müssen, um eine gewünschte Verteilung des Luftstroms erreichen zu können.

Aus der EP 1 132 232 A1 ist eine Ausströmdüse mit einem beweglichen Führungsblatt bekannt, welches zwischen zwei Endstellungen derart bewegbar ist. dass ein zugeführter Luftstrom je nach Stellung des Führungsblatts mit unterschiedlichen Luftstromverteilungen über einen Luftauslass ausströmen kann.

Der Erfindung liegt die Aufgabe zu Grunde, eine Ausströmdüse und eine Luftverteilungsvorrichtung anzugeben, bei welchen auf besonders einfache und doch flexible Art und Weise die Ausrichtung und Verteilung eines auszugebenden Luftstroms einstellbar ist.

Die Aufgabe wird bei einer Ausströmdüse erfindungsgemäß mit den Merkmalen des unabhängigen Patentanspruchs 1 sowie bei einer Luftstromverteilungsvorrichtung erfindungsgemäß mit den Merkmalen des unabhängigen Patentanspruchs 14 gelöst. Vorteilhafte Weiterbildungen der erfindungsgemäßen Ausströmdüse sind Gegenstand der abhängigen Ansprüche.

Gemäß einem ersten Aspekt der Erfindung wird ein Ausströmdüse angegeben, mit einem Gehäuse, welches mindestens einen Lufteinlass und mindestens einen Luftauslass aufweist, und mit einer Luftstromverteilungseinrichtung, welche im Inneren des Gehäuses dem Lufteinlass nachgeschaltet und dem Luftauslass vorgeschaltet angeordnet ist und durch welche ein durch den Lufteinlass zugeführter Luftstrom steuerbar richtungs- und anteilsmäßig als abgeführter Luftstrom auf den Luftstromauslass verteilbar ist, wobei die Luftstromverteilungseinrichtung ein Führungsblatt aufweist, welches zwischen mindestens einer ersten Endstellung und einer zweiten Endstellung derart einstellbar ist, dass der zugeführte Luftstrom durch den Luftauslass in der ersten Endstellung des Führungsblatts als abgeführter Luftstrom mit einer ersten Luftstromverteilung und in der zweiten Endstellung des Führungsblatts als abgeführter Luftstrom mit einer zweiten Luftstromverteilung ausströmbar ist.

Es ist somit ein Aspekt der Erfindung, anstelle der üblicherweise vorgesehenen Vielzahl von Steuermechanismen am Äußeren des Gehäuses bei der erfindungsgemäßen Ausströmdüse im Inneren des Gehäuse und strömungsmechanisch zwischen dem Lufteinlass und dem Luftauslass eine Luftstromverteilungseinrichtung vorzusehen, die ein Führungsblatt aufweist, das seinerseits zumindest eine erste und eine zweite Endstellung zum Erzielen einer ersten und einer zweiten Luftstromverteilung einnehmen kann.

Durch diese Maßnahmen kann die Luftstromverteilung durch einen zentral im Gehäuseinneren der Luftausströmdüse vorgesehenen Mechanismus eingestellt werden, ohne dass es äußerer Mechanismen zum Ausrichten der Luftstromverteilung bedarf. Dies vereinfacht den Aufbau der Luftausströmdüse und ermöglicht auch ein in sich ruhendes Design, da die Notwendigkeit durch die variierende Stellung wechselnder Geometrien entfällt. Die Luftausströmdüse hat also unabhängig von der gewählten Luftstromverteilung immer dieselbe äußere Gestalt, ermöglicht jedoch aufgrund der zentralen Regelung der Luftstromverteilung bereits im Inneren der Düse und nicht erst am Austrittsbereich aus dem Gehäuse das Einstellen der Luftstromverteilung in besonders wirksamer Weise.

An dem Luftauslass kann ein Austrittsgitter vorgesehen sein, wobei der abgeführte Luftstrom mit der ersten Luftstromverteilung über einen ersten Bereich des Austrittsgitters ausströmbar ist und mit der zweiten Luftstromverteilung über einen zweiten Bereich des Austrittsgitters ausströmbar ist. Dabei sind der erste Bereich und der zweite Bereich unterschiedliche Bereiche des Austrittsgitters.

Das bedeutet, dass der Luftstrom je nach Stellung des Führungsblatts und der davon abhängigen Luftstromverteilung über unterschiedliche Bereiche des z.B. einheitlichen Austrittsgitters ausströmen kann. Das Austrittsgitter bleibt dabei unverändert. Wenn das Austrittsgitter z.B. - wie später noch erläutert wird - Lamellen mit in den verschiedenen Bereichen unterschiedlicher Ausrichtung aufweist, kann der Luftstrom in Abhängigkeit von dem Bereich, durch den er aus dem Austrittsgitter austritt, unterschiedlich gerichtet sein.

Das Führungsblatt kann auf einer Führungsblatt-Drehachse angeordnet und durch Verdrehen der Führungsblatt-Drehachse zumindest in die ersten und zweiten Endstellungen verdrehbar oder verschwenkbar sein. Das Verwenden einer Führungsblatt-Drehachse zum Verdrehen oder Verschwenken des Führungsblatts ermöglicht einen besonders einfachen Mechanismus zum Einstellen der Luftstromverteilung, z.B. um auch eine Vielzahl von Zwischenpositionen zwischen den ersten und zweiten Endstellungen zu realisieren.

Es kann ein mit der Führungsblatt-Drehachse gekoppeltes Stellelement zum Verdrehen der Führungsblatt-Drehachse vorgesehen sein. Das Stellelement kann insbesondere aus dem Gehäuse nach außen geführt sein, um dem Benutzer mit einem leichten Handgriff oder Drehrad von außen die Verstellung des Führungsblatts im Inneren zu ermöglichen. Es kann sich dabei natürlich auch um ein motorgetriebenes Stellelement handeln, gegebenenfalls mit einer Art Fernsteuerung, die einen noch bequemeren Zugriff auf die Einstellungsmöglichkeiten der Luftstromverteilung verwirklicht.

Das Gehäuse kann eine Montageseite bzw. Montageebene aufweisen und die Führungsblatt-Drehachse kann derart parallel zur Montageseite angeordnet sein, dass (a) in der ersten Endstellung das Führungsblatt im Wesentlichen parallel zur Montageseite ausgerichtet ist und insbesondere der zugeführte Luftstrom parallel zur Montageseite ausströmbar ist und dass (b) in der zweiten Endstellung das Führungsblatt nicht parallel zur Montageseite ausgerichtet ist und insbesondere der zugeführte Luftstrom nicht parallel, sondern in einem von 0° verschiedenen Winkel, insbesondere senkrecht zur Montageseite ausströmbar ist.

Diese Maßnahmen sind besonders effektiv, um bei der ersten Alternative einerseits entlang einer Montagefläche, an welcher die Montageseite bzw. -ebene des Gehäuses angebracht ist, eine besonders große Wurfdistanz oder Wurfweite für den abgegebenen Luftstrom zu erreichen, andererseits jedoch auch eine Flächenbelüftung oder -kühlung zu realisieren. Bei beiden Zielsetzungen ist es wesentlich, dass der Auswurf des Luftstroms parallel zur Montagefläche (z.B. der Fahrzeugdecke oder der Decke eines Wohnmobils), an welcher die Montageseite des Gehäuses angebracht ist, und möglichst nahe an dieser erfolgt.

Alternativ, nämlich im Zusammenhang mit der zweiten Endstellung, wird dann senkrecht zur Montagefläche und damit auch senkrecht zur Montageseite, sei dies eine Wand oder eine Decke, z.B. eines Fahrzeugs oder Wohnwagens, eine Raumkühlung oder Raumbelüftung im freien Raum erzielt.

Das Führungsblatt kann zusätzlich stufenweise oder kontinuierlich in Zwischenstellungen zwischen der ersten und der zweiten Endstellung einstellbar sein. In der zweiten Endstellung kann das Führungsblatt insbesondere in etwa senkrecht zur Montageseite ausgerichtet sein. Diese Maßnahmen ermöglichen ein beliebiges und damit komfortables Einstellen der Luftstromverteilung in dem zu kühlenden oder zu belüftenden Raum.

Die Luftstromverteilungseinrichtung kann mindestens eine Luftstromumlenkung mit einer Mehrzahl von Schaufelblättern aufweisen, welche zueinander parallel und beabstandet auf einer gemeinsamen Schaufelblatt-Drehachse angeordnet sind und in einem spitzen Winkel zu der Schaufelblatt-Drehachse stehen, wobei die Schaufelblätter mit einer Drehung der Schaufelblatt-Drehachse mindestens zwischen einer ersten Endstellung und einer zweiten Endstellung verdrehbar oder verschwenkbar sind. Das Vorsehen der Anordnung von mehreren Schaufelblättern realisiert somit zusätzliche Möglichkeiten der Ausgestaltung der Luftstromverteilung.

Die Schaufelblätter können in der ersten Endstellung parallel zu einer Zuführrichtung (Koordinatenachsen x bzw. -x) des zugeführten Luftstroms und in der zweiten Endstellung nicht parallel zur Zuführrichtung x, -x des zugeführten Luftstroms ausgerichtet sein, so dass in der ersten Endstellung die Schaufelblätter durch den zugeführten Luftstrom weitestgehend ungehindert passierbar sind und in der zweiten Endstellung der zugeführte Luftstrom - insbesondere in der Ebene yx der Montageseite und/oder senkrecht zur Zuführrichtung x, -x - seitlich ablenkbar ist.

Die erste bzw. zweite Endstellung kann bei einer Variante mit Hilfe jeweiliger Anschläge definiert werden, gegen die die Schaufelblätter bzw. die sie tragende Halterung verschwenkt werden können. Ebenso ist es aber auch möglich, die Endstellungen als Referenzstellungen zu verstehen, wobei die Schaufelblätter auch über die Endstellungen hinaus bewegt werden können. So können die Schaufelblätter z.B. beliebig über einen Winkel von 360 Grad und darüber hinaus verschwenkt werden, wobei somit beliebige Zwischenstellungen möglich sind.

In der ersten Endstellung entfalten die Schaufelblätter im Hinblick auf den zugeführten Luftstrom somit keine Wirkung, während sie in der zweiten Endstellung die Richtung und die Verteilung des zugeführten Luftstroms beim Verlassen des Gehäuses beeinflussen.

Dieser Effekt ergibt sich durch die schräge Anordnung der - sinnvollerweise sehr flach ausgebildeten - Schaufelblätter auf der Schaufelblatt-Drehachse in einem spitzen Winkel. Während die Schaufelblätter in einer Drehstellung (erste Endstellung) dem Luftstrom keinen Widerstand entgegensetzten, bewirken sie in einer anderen Drehstellung (z.B. der zweiten Endstellung) eine Umlenkung des Luftstroms.

Es kann ein mit der Schaufelblatt-Drehachse gekoppeltes Stellelement zum Verdrehen der Schaufelblatt-Drehachse vorgesehen sein. Auch hier kann das Stellelement ein von außen durch den Benutzer am Gehäuse mechanisch betätigbares Stellrad oder dergleichen sein. Alternativ bietet sich auch wieder der motorisierte Betrieb an, gegebenenfalls mit einer entsprechenden Fernsteuerfunktion.

Die Schaufelblätter können planar und kreis- oder ellipsenförmig ausgebildet sein und in ihrem jeweiligen Mittelpunkt von der Schaufelblatt-Drehachse durchdrungen und mit dieser verbunden sein. Dies sind besonders einfache Ausgestaltungen von Schaufelblättern, die sich in der Massenproduktion leicht und kostengünstig herstellen lassen. Dabei sind die Schaufelblätter vorzugsweise gleich ausgebildet. Dies ist jedoch nicht zwingend. Gerade wenn auf bestimmte Gehäusegeometrien Rücksicht genommen werden muss, z.B. im Hinblick auf eine sich transversal zum Luftstrom ändernde Bauhöhe, z.B. am Deckenbereich, können auch unterschiedliche Schaufelblätter, nämlich mit unterschiedlicher Größe vorgesehen werden. Die Fixierung der Schaufelblatt-Drehachse im Bereich des jeweiligen Mittelpunkts der Schaufelblätter ermöglicht eine besonders kompakte Bauweise bei maximaler Richtwirkung. Aber auch dies ist nicht zwingend; denkbar sind auch exzentrisch angeordnete Schaufelblätter.

Die Luftstromumlenkung kann mit dem Führungsblatt bzw. mit dessen Drehachse gekoppelt sein, insbesondere nach Art einer starren Verbindung. Zum Beispiel können die Führungsblatt-Drehachse und die Schaufelblatt-Drehachse (Drehachse für die Luftumlenkung) identisch sein, z.B. durch Verwendung einer gemeinsamen Welle oder dergleichen, so dass ein Verschwenken des Führungsblatts immer strikt gekoppelt ist mit einem Verdrehen oder Verschwenken der Schaufelblätter. In diesem Fall genügt ein Stellelement, um das Führungsblatt und die Schaufelblatt gleichzeitig zu verschwenken.

Im Ergebnis bewirkt diese Variante, dass in einer definierten Stellung das Führungsblatt und die Schaufelblätter den Luftstrom möglichst ungehindert passieren lassen, während in einer anderen definierten Stellung das Führungsblatt den Luftstrom bezüglich der Hauptströmungsrichtung umlenkt und die Schaufelblätter gleichzeitig zusätzlich eine Umlenkung des Luftstroms quer zur Hauptströmungsrichtung und damit eine Verbreiterung des Luftstroms bewirken. Das Führungsblatt und die Schaufelblätter müssen dabei nicht individuell verstellt werden, sondern nehmen aufgrund ihrer Kopplung zwingend jeweils gemeinsam eine der definierten Stellungen ein. Selbstverständlich sind dabei auch beliebige Zwischenstellungen möglich.

Jedoch ergibt sich eine besondere Flexibilität beim Einstellen der Luftstromverteilung, wenn die Stellung des Führungsblatts und die Stellung der Schaufelblätter voneinander unabhängig realisierbar sind. Dies ist z.B. möglich durch das Verwenden ineinander steckbarer Hohlwellen mit entsprechenden Ausnehmungen, so dass insgesamt die Parallelität der Drehachsen für das Führungsblatt einerseits und für die Schaufelblätter andererseits gewährleistet ist.

Zur Steigerung der Flexibilität bei der Luftstromeinstellung können zwei oder mehr - insbesondere voneinander unabhängig betätig- und bewegbare - Luftstromumlenkungen vorgesehen sein.

Stromaufwärts und unmittelbar vor der Stromverteilungseinrichtung kann eine Überströmschwelle zur Bündelung des zugeführten Luftstroms auf die Luftstromverteilungseinrichtung hin vorgesehen sein. Eine derartige Überströmschwelle führt den zugeführten Luftstrom kurz vor dem Erreichen der Luftstromverteilungseinrichtung noch einmal zusammen, erhöht mithin die Strömungsgeschwindigkeit und richtet den gesamten Luftstrom auf den Raumbereich der ablenkenden Elemente der Luftstromverteilungseinrichtung aus, nämlich im Hinblick auf das Führungsblatt und gegebenenfalls die Schaufelblätter, so dass diese ihre maximale Wirkung entfalten können.

Durch die Überströmschwelle kann insbesondere erreicht werden, dass der Luftstrom nicht unmittelbar auf z.B. quer zur Luftströmung stehende Lamellen auftrifft, wodurch starke Verwirbelungen hervorgerufen würden. Diese Lamellen können durch die schützende Wirkung der Überströmschwelle überströmt werden.

Zudem gewährleistet die Überströmschwelle, dass der Luftstrom gezielt hin zu der Luftstromverteilungseinrichtung geführt bzw. ausgerichtet wird, wodurch die dort vorgesehenen Luftleitelemente, insbesondere das Führungsblatt und die Schaufelblätter, ihre Wirkung optimal entfalten können. Im Bereich der Überströmschwelle kann auch eine Verbreiterung des Luftführungskanals vorgesehen werden, so dass eine gewisse Diffusorwirkung erzielt werden kann.

Der Luftauslass kann mindestens ein Austrittsgitter mit einer Mehrzahl von Lamellen aufweisen, wobei das Austrittsgitter bzw. die Lamellen insbesondere in einem der Montageseite des Gehäuses gegenüberliegenden Bereich und/oder in Seitenbereichen des Gehäuses ausgebildet sind. Durch das Verwenden eines Austrittsgitters mit mehreren Lamellen ist eine nachgeschaltete Verteilung des im Gehäuseinneren vorverteilten Luftstroms möglich, z.B. über die Stellung der Lamellen in Bezug auf die Gehäuseflächen und insbesondere in Bezug auf die Montageseite und damit in Bezug auf die Montagefläche, z.B. einer Decke oder Wand, an welcher die zu Grunde liegende Vorrichtung zum Kühlen oder Belüften angebracht ist. Die Lamellen können dabei bei einer bevorzugten Ausführungsform starr am Gehäuse der Luftausströmdüse ausgebildet sein. Möglich sind jedoch auch in sich bewegliche bzw. verschwenkbare Lamellen.

Die Lamellen können in einem als oben angegebener erster Bereich dienenden, dem Lufteinlass und/oder der Luftstromverteilungseinrichtung näher gelegenen Bereich in Relation zur Montageseite steiler und in einem als zweiter Bereich dienenden, dem Lufteinlass und/oder der Luftverteilungseinrichtung weiter entfernten Bereich in Relation zur Montageseite flacher ausgerichtet sein. Die in dem ersten Bereich steileren Lamellen gestatten die Kühlung oder Belüftung des Raums in dem von der Montageseite abgewandten Bereich. So ist z.B. eine Kühlung oder Belüftung bei einer Deckenmontage direkt unterhalb des Bereichs der Decke bzw. des Geräts und des Luftauslasses möglich. Die in dem zweiten Bereich flacher ausgerichteten Lamellen des Gehäuses gewährleisten dagegen eine Flächenbelüftung oder -kühlung entlang der Montagefläche (Raumdecke), an welcher das Gehäuse mit seiner Montageseite angebracht ist, oder gegebenenfalls eine besonders hohe Wurfweite, um von der Montageseite und der Montagefläche weiter entfernte Raumgebiete des zu kühlenden oder zu belüftenden Raums mit dem Luftstrom zu erreichen.

Zur Erzielung einer hohen Wurfweite in der Ebene xy der Montageseite kann über die Wirkung des Coandaeffekts montageseitig und vom Lufteinlass und von der Luftumlenkeinrichtung abgewandt im Bereich des Luftstromauslasses ein Überströmelement ausgebildet sein. Um die eben beschriebenen Effekte der Flächenbelüftung oder -kühlung und der Raumbelüftung oder -kühlung über eine gesteigerte Wurfweite weiter zu verstärken, kann also hier der so genannte Coandaeffekt genutzt werden, durch welchen über die Änderung der Druckverteilung im Luftstrom mittels eines zu überströmenden Überströmelements eine Richtwirkung des Luftstroms, nämlich in Form eines Anlegens an der korrespondierenden Fläche, nämlich hier an der Montagefläche bzw. Raumdecke, an welcher die Montageseite des Gehäuses angebracht ist, erzielt wird.

Gemäß einem weiteren Aspekt wird eine Luftstromverteilungsvorrichtung angegeben, mit einem Luftführungsgehäuse, welches mindestens einen Luftauslass aufweist, wobei am Luftauslass eine erfindungsgemäße Ausströmdüse mit einem Lufteinlass angebracht ist. Die erfindungsgemäße Luftstromverteilungsvorrichtung kann selbstverständlich auch mehrere Luftauslässe aufweisen, an welchen dann jeweils eine erfindungsgemäße Ausströmdüse vorgesehen wird. Dies erhöht die Möglichkeiten der individuellen Kühlung oder Belüftung mit der erfindungsgemäßen Luftstromverteilungsvorrichtung vorgesehener Räume.

Diese und weitere Aspekte werden auf der Grundlage der beigefügten schematischen Zeichnungen anhand von Beispielen erläutert.
- **Fig. 1A - B**: zeigen in perspektivischer Draufsicht bzw. in geschnittener Seitenansicht eine Ausführungsform der Luftstromverteilungsvorrichtung.
- **Fig. 2 - 3**: zeigen in perspektivischer Explosionsdarstellung zwei andere Ausführungsformen der Luftstromverteilungsvorrichtung unter Verwendung verschiedener Ausströmdüsen.
- **Fig. 4A - B**: zeigen in perspektivischer Ansicht von oben bzw. von unten eine andere Ausführungsform einer Luftstromverteilungsvorrichtung.
- **Fig. 5**: zeigt in perspektivischer Draufsicht Details zu der in der Luftstromverteilungsvorrichtung der Fig. 4A - B verwendeten Luftausströmdüse.
- **Fig. 6 - 7**: zeigen in geschnittener Seitenansicht Details der in Zusammenhang mit den Ausführungsformen der Fig. 4A - B und 5 verwendeten Luftausströmdüse.

Nachfolgend werden Ausführungsformen der Erfindung beschrieben. Sämtliche Ausführungsformen der Erfindung und auch ihre technischen Merkmale und Eigenschaften können einzeln isoliert oder wahlfrei zusammengestellt miteinander beliebig und ohne Einschränkung kombiniert werden.

Strukturell und/oder funktionell gleiche, ähnliche oder gleich wirkende Merkmale oder Elemente werden nachfolgend im Zusammenhang mit den Figuren mit denselben Bezugszeichen bezeichnet. Nicht in jedem Fall wird eine detaillierte Beschreibung dieser Merkmale oder Elemente wiederholt.

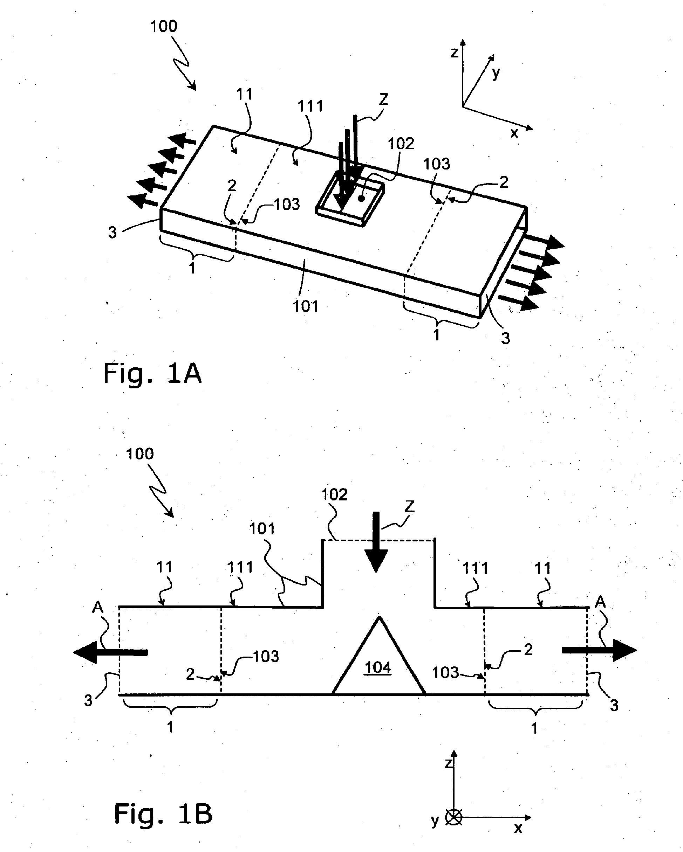

Die Fig. 1A und 1B zeigen in perspektivischer Draufsicht bzw. in geschnittener Seitenansicht in schematisch eine Ausführungsform einer erfindungsgemäßen Luftstromverteilungsvorrichtung 100.

Die Vorrichtung 100 weist ein Luftführungsgehäuse 101 auf, mit einem Hauptlufteinlass 102, über welchen der zu verteilende Luftstrom Z zugeführt wird. Dieser kann z.B. einen Klimagerät, insbesondere einem Dachklimagerät oder dergleichen entstammen.

Die erfindungsgemäße Luftstromverteilungsvorrichtung 100 weist des Weiteren erste und zweite Luftauslässe 103 auf, an welchen jeweils eine erfindungsgemäße Ausströmdüse 1 mit ihrem jeweiligen Lufteinlass 2 angebracht ist, um den aus einem Luftauslass 103 der Luftstromverteilungsvorrichtung 100 ausgelassenen Luftstrom als zugeführten Luftstrom Z aufzunehmen und dann nach interner Verteilung über einen jeweiligen Luftauslass 3 in den zu kühlenden oder zu belüftenden Raum als Abgabeluftstrom A abzugeben.

Bei der Ausführungsform der Fig. 1A und 1B sind die Luftstromverteilungsvorrichtung 100 und aber auch die dabei vorgesehenen Ausströmdüsen 1 mit ihren Montageseiten 111 bzw. 11 an einer in den Fig. 1A und 1B nicht gezeigten Montagefläche 120 angebracht. Dies kann z.B. der Dach- oder Deckenbereich oder auch ein Wandbereich eines Fahrzeugs sein, z.B. eines Wohnwagens oder eines Mobilehomes oder dergleichen.

Bei der geschnittenen Ansicht der Fig. 1B ist noch ein Verteilungselement 104 dargestellt, welches zur Verteilung des über den Haupteinlass 102 zugeführten Luftstrom Z an die Auslässe 103 vorgesehen ist.

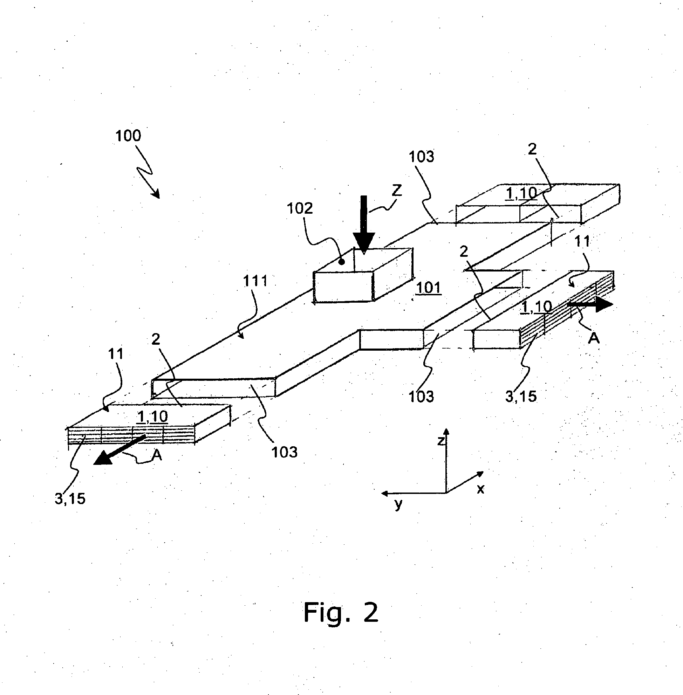

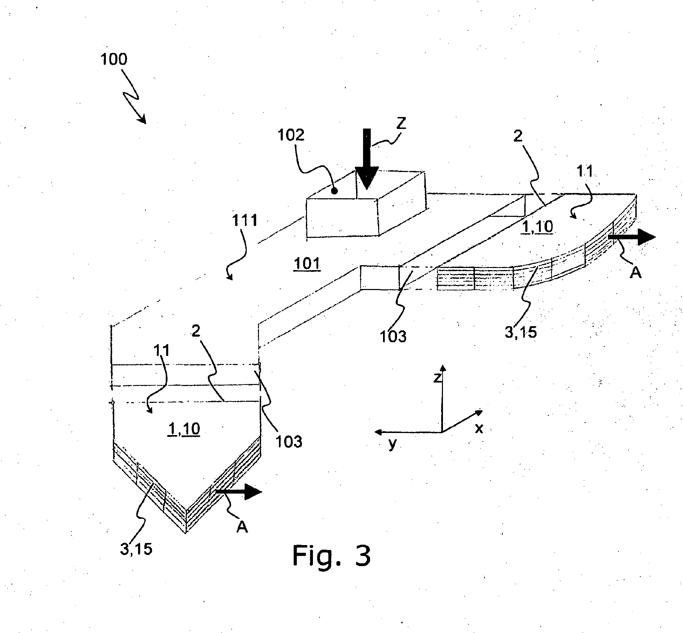

In schematischer Explosionsdarstellung zeigen die Fig. 2 und 3 zwei andere Ausführungsformen der erfindungsgemäßen Luftstromverteilungsvorrichtung 100. Wiederum sind der Hauptluftstromeinlass oder Hauptlufteinlass 102 der Luftstromverteilungsvorrichtung 100 und die jeweils vorgesehenen Luftauslässe 103 dargestellt, an welchen verschiedene Ausführungsformen der erfindungsgemäßen Ausströmdüse 1 mit ihren Lufteinlässen 2 anzubringen sind, so dass im Betrieb der über den Hauptlufteinlass 102 zugeführte Luftstrom Z nach interner Verteilung einerseits in der Vorrichtung 100 über das Luftverteilungselement 104 selbst und dann aber intern innerhalb der vorgesehenen Luftausströmdüsen 1 eine Luftausgabe A über die Luftauslässe 3 der einzelnen Luftausströmdüsen 1 erfolgt.

Die Ausführungsform der Fig. 2 für die erfindungsgemäße Luftstromverteilungsvorrichtung 100 besitzt in etwa eine T-förmige Gestalt, wobei an den Enden des T jeweils eine Ausströmdüse 1 vorgesehen ist. Diese erfindungsgemäße Luftstromverteilungsvorrichtung 100 kann z.B. an der Decke eines Fahrzeugs und dort am Wandbereich angebracht sein.

Die Ausführungsform für die erfindungsgemäße Luftstromverteilungsvorrichtung gemäß Fig. 3 hat dagegen die Form eines L und ist daher besonders für eine Eckmontage an der Decke z.B. eines Fahrzeugs geeignet.

Auch weisen die in den Fig. 2 und 3 vorgesehenen Ausströmdüsen 1 im Bereich ihrer Luftauslässe 3 unterschiedliche Ausgestaltungsformen von dort vorgesehenen Austrittsgittern 15 auf.

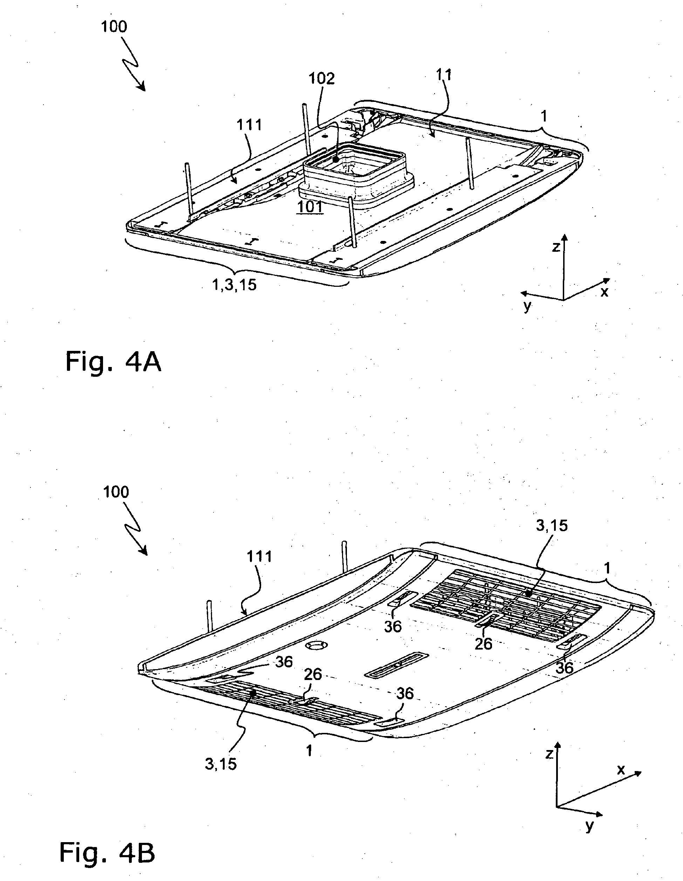

Die Fig. 4A und 4B zeigen eine stärker konkretisierte Darstellung einer erfindungsgemäßen Luftstromverteilungsvorrichtung 100 zur Deckenmontage in einem Fahrzeug, und zwar in einer Draufsicht bzw. in einer Ansicht von unten.

Bei der Darstellung der Fig. 4A sind also die Montageseiten 111 und 11 der Luftstromverteilungsvorrichtung 100 bzw. der dabei vorgesehenen Ausströmdüsen 1 zu sehen, sowie der Hauptlufteinlass 102 der Luftstromverteilungsvorrichtung 100, die am Gehäuse 101 ausgebildet sind.

Bei der Ansicht von unten gemäß Fig. 4B sind dagegen die von den Austrittsgittern 15 realisierten Luftauslässe 3 der Ausströmdüsen 1 nebst Stellelementen 26 und 36 für die hier nicht dargestellten, aber im Inneren der Düsen 1 vorgesehenen Mechanismen 21, 31 einer Luftstromverteilungseinrichtung 20 zu erkennen.

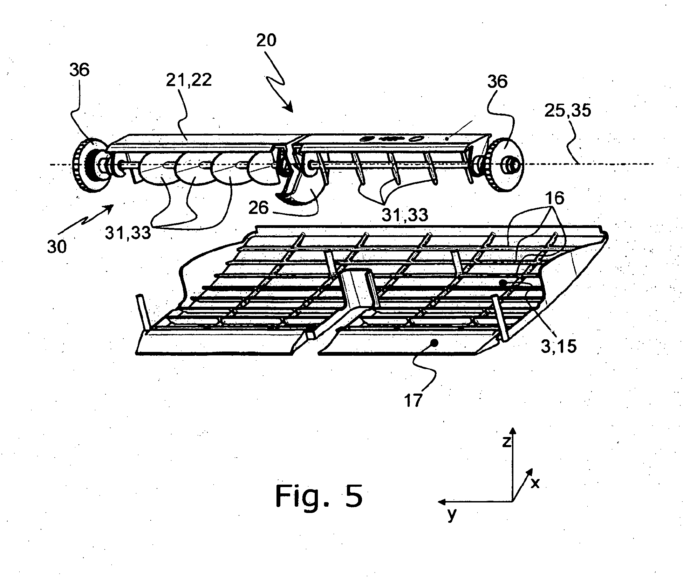

Fig. 5 zeigt in perspektivischer Explosionsdarstellung einen Teil des Innenlebens einer Ausführungsform der erfindungsgemäßen Ausströmdüse 1.

Im unteren Bereich ist das Austrittsgitter 15 des Luftauslasses 3 dargestellt, durch welches der Luftauslass 3 der Ausströmdüse 1 gebildet bzw. abgedeckt wird.

Im Bereich darüber ist - hier vom Austrittsgitter 15 entfernt, aber im Betrieb auf diesem quasi aufliegend - die Luftstromverteilungseinrichtung 20 mit ihren Hauptkomponenten dargestellt. Diese Hauptkomponenten werden gebildet von einem Führungsblatt 21, welches um eine dort dargestellte Führungsblatt-Drehachse 25 durch Betätigung des Stellelements 26 in Form eines Stellrads um die Führungsblatt-Drehachse 25 verschwenkbar ist.

In der Darstellung der Fig. 5 befindet sich das Führungsblatt 21 in einer ersten Endstellung 22, die auch als Ausgangslage bezeichnet werden kann, und zwar parallel zum zugeführten Luftstrom Z und parallel zu der hier nicht dargestellten Montageseite 11 der Ausströmdüse 1. In dieser ersten Endstellung 22 beeinflusst das Führungsblatt 21 den zugeführten Luftstrom Z höchstens geringfügig, im Idealfall überhaupt nicht, so dass durch das Führungsblatt 21 in dieser ersten Endstellung 22 keine Ablenkung des zugeführten Luftstroms Z erfolgt und, sofern nachgeschaltet oder stromabwärts davon keine andere Wechselwirkung eintritt, der Luftstrom die Luftverteilungseinrichtung 20 also z.B. nahezu ungehindert passiert.

Die Luftstromverteilungseinrichtung 20 gemäß der Ausführungsform der Fig. 5 weist des Weiteren zwei Umlenkungen 30 mit jeweils einem Satz von Schaufelblättern 31 auf, die an unabhängigen und jeweilige Schaufelblatt-Drehachsen 35 definierenden Wellen oder Stangen in einem spitzen Winkel dazu angebracht und zueinander äquidistant und parallel bei gleicher Formgebung angeordnet sind. Die die Schaufelblatt-Drehachsen 35 definierenden Wellen oder Stangen können über die vorgesehenen Stellelemente 36 z.B. in Form von Stellrädern gedreht werden, um die Orientierung der Umlenkungen und damit der Schaufelblätter 31 in Bezug auf den zugeführten Luftstrom Z zu variieren.

Bei der in Fig. 5 dargestellten Anordnung befinden sich beide Umlenkungen 30 und damit die jeweiligen Schaufelblätter 31 in einer zweiten Endstellung 33, die auch als Endlage aufgefasst werden kann, so dass der anströmende zugeführte Luftstrom Z seitlich abgelenkt würde, und zwar - wenn die ursprüngliche Strömungsrichtung die dargestellte x-Richtung ist - in die dargestellten Richtungen y und -y.

Wenn die Schaufelblätter 31 hingegen mit Hilfe der Schaufelblatt-Drehachsen 35 um etwa 90 Grad in eine erste Endstellung gedreht werden, stehen die schräg auf den Schaufelblatt-Drehachsen 35 angeordneten Schaufelblätter 31 derart in dem Luftstrom, dass sie ihm keinen oder allenfalls einen nur geringen Luftwiderstand entgegensetzen (in Fig. 5 nicht dargestellt). Dementsprechend lenken die Schaufelblätter 31 den Luftstrom dann praktisch nicht ab.

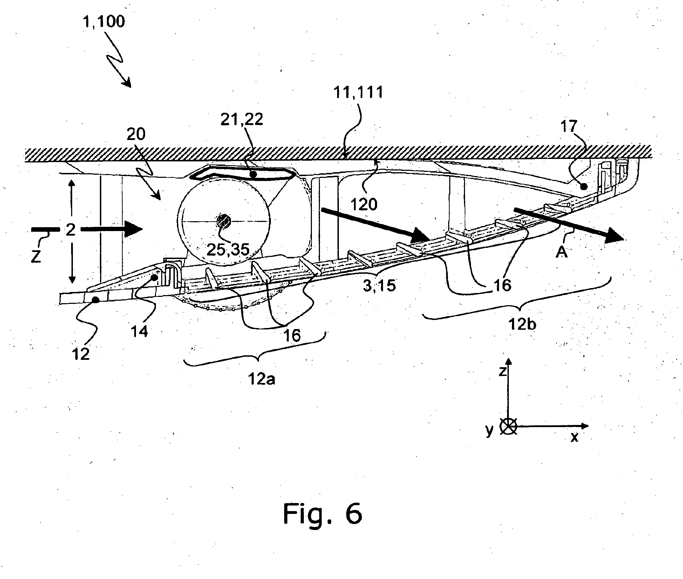

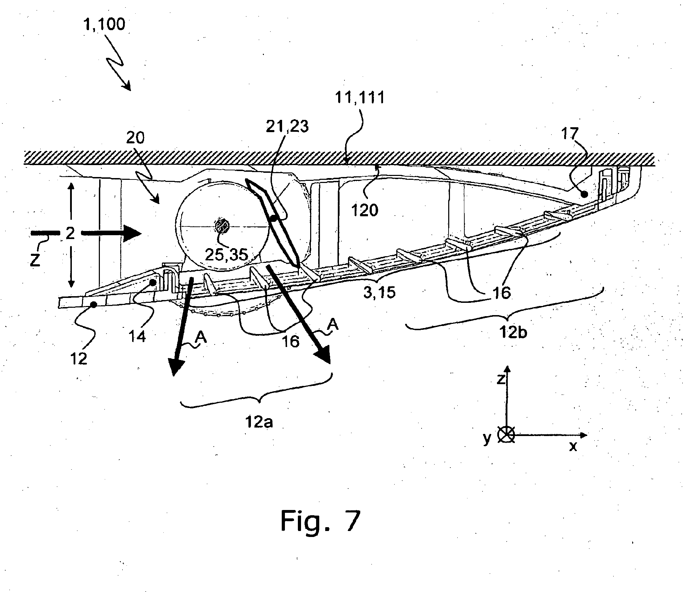

Die Fig. 6 und 7 zeigen die Anordnung gemäß Fig. 5 im montierten Zustand in Schnittdarstellung, wobei für das Führungsblatt 21 jeweils die erste Endstellung 22 (Fig. 6) und die zweite Endstellung 23 (Fig. 7) dargestellt ist.

In den Darstellungen der Fig. 6 und 7 ist auch eine Überströmschwelle 14 als Bestandteil des Gehäuses 10 zwischen dem jeweiligen Lufteinlass 2 und der Luftverteilungseinrichtung 20 im Inneren des Gehäuses 10 auf einer der Montageseite 11 abgewandten Seite 12 zu erkennen. Die Überströmschwelle 14 dient der Fokussierung des zugeführten Luftstroms Z auf den Raumbereich, in welchem sich die Luftstromverteilungseinrichtung 20 mit dem Führungsblatt 21 einerseits und den Umlenkungen 30 andererseits befindet, um die strömungsmechanische Wechselwirkung zu steigern.

Die Überströmschwelle 14 bewirkt weiterhin, dass der Luftstrom nicht unmittelbar auf die vorderen, näher zu der Überströmschwelle 14 angeordneten Lamellen 16 auftreffen kann. Vielmehr muss der Luftstrom erst durch das Führungsblatt 21 bzw. die Schaufelblätter 31umgelenkt werden. Die vorderen Lamellen 16 werden zunächst einfach überströmt, wie insbesondere auch in Fig. 6 erkennbar ist.

Auf der dem Lufteinlass 2 abgewandten Seite des Gehäuses 10 ist ein Überströmelement 17 zu erkennen, durch welches hier beim ungehinderten Durchströmen des Gehäuses 10 beim Austreten im Zusammenwirken mit den in diesem Bereich weniger steil oder eher flach gestellten Lamellen 16 der so genannte Coandaeffekt zur Entfaltung kommt, durch welchen der austretende Luftstrom A mit einer hohen Wurfweite entlang der Montagefläche 120, hier der Decke, strömt und somit einerseits eine Flächenkühlung bewirken kann und alternativ oder zusätzlich von der Ausströmdüse 1 weiter entferntere Raumbereiche des zu belüftenden oder zu kühlenden Raums erreicht.

Ein weiterer Aspekt ist die Ausrichtung von in dem Austrittsgitter 15 vorgesehenen Lamellen 16. Im Bereich direkt unterhalb der Luftstromverteilungseinrichtung 20, also insbesondere direkt hinter der Überströmschwelle 14, stehen die Lamellen 16 in Bezug auf die Montageseite 11 nahezu senkrecht, zumindest jedoch weniger stark geneigt im Vergleich zum Bereich des Austrittsgitters 15, der von dem Lufteinlass 2 entfernter ist. Dort nämlich bilden die Lamellen 16 mit der Montageseite 11 einen spitzen Winkel und erstrecken sich fast parallel bzw. flach zu der Montageseite 11 bzw. einer dortigen Montageebene. Der zentrale steilere Winkel der Lamellen 16 bewirkt ein Ausströmen der Luft in den Raumbereich direkt unterhalb der Ausströmdüse 1, wogegen die mit spitzem Winkel geneigten, relativ flach zu der Montageseite 11 und entfernter von dem Lufteinlass 2 vorgesehenen Lamellen 16 - dies wurde oben bereits erwähnt - einen Luftstrom entlang der Montagefläche 120, hier der Decke, bewirken. Je nach Stellung des Führungsblatts 21 wird der Luftstrom somit in den Bereich mit den steiler stehenden Lamellen 16 umgelenkt (zweite Endstellung 23, Fig. 7) oder nahezu ungehindert zu den flach stehenden Lamellen 16 durchgelassen (erste Endstellung 22, Fig. 6). Nun wird auf die Zeichnungen im allgemeinen Bezug genommen. Dabei werden weitere Merkmale der Erfindung erläutert und Varianten zu den Ausführungsformen angegeben.

Durch die Erfindung wird eine Ausströmdüse 1 zur individuellen Einstellung der Luftstromrichtung und der Streuung eines Hauptluftstroms z.B. bei einem Gerät zur Innenraumbelüftung oder ―kühlung angegeben, und zwar bei innenraumseitig ungestörtem Design.

Dabei können in vorteilhafter Weise auch folgende Teilzielsetzungen erreicht werden:
- Die Bereitstellung einer Ausströmdüse 1 für einen Luftverteiler 100 einer Dachklimaanlage in flacher Bauweise, d.h. mit einer niedriger Bauhöhe des Luftkanals im Vergleich zur seiner Breite (niedrige Deckenhöhen in Reisemobilen und Caravans, Anprall mit Türen oder Schranktüren vermeiden)
- Die Ausströmdüse 1 ist in ihrer Formgebung den innenraumseitigen Designvorgaben eines Luftstromverteilers 100 angepasst. Ihre Ausführung soll die innenraumseitigen Formensprache eines Luftstromverteilers 100 im Bereich des Luftaustritts 103 fortführen können.
- Die Ausströmdüse 1 erlaubt durch den Benutzer eine gezielte Steuerung des Luftstroms. Der austretende Luftstrom A erreicht gezielt alle erreichbaren Bereiche des Innenraums und lässt sich in seiner Streuungsqualität einstellen. Bei maximaler Wurfweite wird ein Anlegen des Luftstroms an die Decke 120 erreicht.

- Bei der Ausströmdüse 1 ist der Druckverlust im Luftweg möglichst gering und möglichst unabhängig von der Umlenkung des Hauptluftstroms.
- Die Ausströmdüse 1 besteht aus wenigen Bauteilen.
- Die Ausströmdüse 1 kann motorisiert steuerbare Leit- und oder Führungselemente 20, 21, 31 aufweisen.

Erfindungsgemäß wird also insbesondere eine Ausströmdüse 1 angegeben,
- die an den Luftführungskanal 103 eines an die Decke montierten Luftstromverteilers 100 z.B. einer Heizungs-, Lüftungs- oder Klimaanlage anschlbæßtder der Luftstrom Z auf der Eintrittseite 2 in die Ausströmdüse 1 einströmt,
- bei der der Luftstrom Z die Ausströmdüse 1 durch mindestens eine Austrittsöffnungen 3 verlässt,
- bei der innerhalb des Volumens, welches die Ausströmdüse 1 zwischen Eintrittseite 2 und Austrittsöffnung 3 einnimmt, der Hauptluftstrom durch Leit- und oder Führungselemente 20, 21, 31 geteilt und oder ausgerichtet wird,
- bei der das Strömungsvolumen von der Eintrittseite 2 bis zu mindestens einen Austrittsöffnung 3 von einer Wandung oder z.B. einem Gehäuse 10 umhüllt wird, so dass sich zwischen den Öffnungen 2, 3 ein Luftkanal ergibt.
- die mindestens ein Führungsblatt 21 aufweist, welches auf einer Führungsblatt-Drehachse 25 gelagert ist, die mit mindestens einem Stellelement 26 zum Verdrehen des Führungsblattes 21 ausgestattet oder verbunden ist,
- die mindestens ein Austrittsgitter 15 aufweist,
- die mindestens eine Überströmschwelle 14 aufweist, welche auf der Eintrittseite 2 vor dem Austrittsgitter 15 angeordneten ist,
- die einen die Ausströmdüse 1 z.B. als Gehäuse 10 umhüllenden Luftkanal aufweist, welcher vom Luftführungskanal der zu Grunde liegenden Vorrichtung 100 gebildet sein kann.

Weitere Aspekte, die Ausführungsformen der Erfindung betreffen:
- Die die Funktion bestimmenden Merkmale, Elemente und oder Bauteile können räumlich zueinander in der Art angeordnet und ausgestaltet sein, dass der Hauptluftstrom Z in Abhängigkeit des Drehwinkels des Führungsblattes 21 gezielt nur durch Teilbereiche des Austrittsgitters 15 geleitet wird.
- Die die Funktion bestimmenden Merkmale, Elemente und oder Bauteile können räumlich zueinander in der Art angeordnet und ausgestaltet sein, dass der Hauptluftstrom Z in der Ausgangslage 22, nämlich insbesondere in der ersten Endstellung 22 das Austrittsgitter 15 nur in einem Teilbereich deckennah durchströmt.
- Das Austrittsgitter 15 kann in der Art gestaltet sein, dass sich in der Ausgangslage 22, nämlich insbesondere in der ersten Endstellung 22 der Hauptluftstrom Z nach dem Verlassen der Ausströmdüse 1 an die Decke anlegt: Coandaeffekt.
- Die die Funktion bestimmenden Merkmale, Elemente und oder Bauteile können räumlich zueinander in der Art angeordnet und ausgestaltet sein, dass in der Endlage 23, nämlich insbesondere in der zweiten Endstellung 23 des Führungsblattes 21, also insbesondere bei maximaler Verdrehung in Bezug zur Ausgangslage 22 nur ein Teilbereich des Austrittsgitters 15 unmittelbar hinter der Überströmschwelle 14 vom Hauptluftstrom Z durchströmt wird.
- Es können mehrere unter einem Führungsblatt 21 angeordnete und mit diesem Führungsblatt 21 fest verbundene Schaufelblätter 31 ausgebildet sein, welche in der Art ausgeformt sind, dass bei einer Verstellung um die Führungsblatt-Drehachse 25 eine gezielte seitliche Umlenkung und oder eine Streuung des an der Eintrittseite 2 einströmenden Luftstroms Z bewirkt wird, und/oder welche in der Art ausgeformt sind, dass sie in einer der Ausgangslage 22 des Führungsblattes 21 zugehörigen Orientierung der Schaufelblätter 31, nämlich annähernd parallel zur Anströmungsrichtung x, -x ausgerichtet sind und dadurch einen möglichst geringen Druckverlust bei Durchströmung verursachen.
- Es kann mindestens eine, unter einem Führungsblatt 21 angeordnete, Schaufelstange für die Schaufelblatt-Drehachse 35 der Schaufelblätter 31 vorgesehen sein, wobei jeweils eine Mehrzahl von Schaufelblättern 31 vorliegt, welche über die jeweilige Stange fest miteinander verbunden sind
- Die Schaufelstange kann jeweils ein eigenständiges Bauteil sein.
- Die Schaufelstange kann jeweils um dieselbe Drehachse 25 wie das Führungsblatt 21 eigenständig drehbar gelagert sein.
- Die Schaufelstange kann jeweils unabhängig von dem Führungsblatt 21 frei drehbar sein.
- Die Schaufelstange kann jeweils seitlich und oder mittig mindestens ein Stellelement 36 zum Verdrehen dieser Schaufelstange aufweisen.
- Die Schaufelstange kann jeweils beim Verstellen um ihre Drehachse 35 eine gezielte seitliche Umlenkung und oder eine Streuung des an der Eintrittseite 2 einströmenden Luftstroms Z bewirken.
- Die Schaufelstange kann jeweils in der Art ausgeformt sein, dass sie in einer der Ausgangslage 22 des Führungsblattes 21 zugehörigen Ausgangslage der Schaufelblätter 31, nämlich annähernd parallel zur Anströmungsrichtung x, -x ausgerichtet, einen möglichst geringen Druckverlust bei Durchströmung verursacht.
- Es kann mindestens ein Austrittsgitter 15 vorgesehen sein, welches als Paket von unverstellbar ausgerichteten Führungslamellen 16 ausgestaltet ist.
- Die Führungslamellen 16 unterstützen die Orientierung des Hauptluftstroms oder eines Teilluftstroms entsprechend des eingestellten Drehwinkels des Führungsblattes 21 im durchströmten Teilbereich des Austrittsgitters 15.
- Die Neigungswinkel gegenüber der Waagerechten der deckennahen Führungslamellen sind in der Art ausgeformt, dass der Luftstrom sich in der Ausgangslage 22 des Führungsblattes 21 nach Verlassen der Ausströmdüse 1 an die Decke bzw. Montagefläche 120 anlegt.
- Die Überströmschwelle 14 ist z.B. in der Art gestaltet, dass der Luftstrom Z über die Führungslamellen 16 hinter der Überströmschwelle 14 hinweggeleitet wird, insbesondere in der Art, dass in der Ausgangslage 22 des Führungsblattes 21 nur ein Teilbereich des Austrittsgitters 15 deckennah durchströmt wird.
- Die Überströmschwelle 14 kann mittels einer Anströmrampe in der Art ausgeformt sein, dass der Luftstrom Z auf der Eintrittseite 2 vor dem Austrittsgitter 15 in der zuvor genannten Weise Führungslamellen 16 überströmt, insbesondere in der Art, dass in der Ausgangslage 22 des Führungsblattes 21 nur ein Teilbereich des Austrittsgitters 15 deckennah durchströmt wird.

Das bewegliche Führungsblatt 21 kann stufenlose und/oder einrastende Positionen aufweisen, um ein Verdrehen des Führungsblattes 21, infolge des Staudrucks auf das Führungsblatt 21 beim Durchströmen der Ausströmdüse 1 oder infolge von Vibrationen durch einen Reibungswiderstand seiner beweglichen Elemente oder durch den Widerstand einer Rastung zu verhindern.

Jede Schaufelblatt-Drehachse 35 oder jede Schaufelstange kann stufenlose und oder einrastende Positionen aufweisen, um ein Verdrehen der Schaufelstange infolge des Staudrucks auf ihre Schaufelblätter 31 beim Durchströmen der Ausströmdüse 1 oder infolge von Vibrationen durch einen Reibungswiderstand seiner beweglichen Elemente oder durch den Widerstand einer Rastung zu verhindern. Durch maximale Drehung kann in einer Endposition eines Führungsblattes 21 der Luftkanal verschlossen werden.

Durch Drehung eines Führungsblattes 21 kann die Luft in der Art umgelenkt werden, dass sie das Austrittsgitter 15 in einer der auf der Eintrittseite 2 der Ausströmdüse 1 einströmenden Luft entgegen gesetzten Raumrichtung verlässt.

Die Überströmschwelle 14 kann als Anströmrampe ausgeführt sein und ein gemeinsames Bauteil mit dem Ausströmgitter 15 bilden, z.B. als Teil des Gehäuses 10 der Ausströmdüse 1.

Die Stellelemente 26 des Führungsblattes 21 und/oder die Stellelemente 36 jeder Schaufelblatt-Drehachse 35 bzw. Schaufelstange kann einen Mechanismus zum Verstellen aufweisen. Dies kann z.B. durch ein an einer Drehachse 25, 35 angebundenes Zahnrad sein, welches durch Verschieben einer Zahnstange verdreht wird.

Unterhalb eines Führungsblattes 21 kann beiderseits des mittig angeordneten Stellelements 26 je eine Drehachse 35 für Schaufelblätter oder eine Schaufelstange gelagert sein. In diesem Fall wird der Hauptluftstrom Z in zwei seitlich lenkbare Teilströme aufgeteilt, die über eine Austrittsöffnung 3 die Ausströmdüse 1 verlassen.

## Patentansprüche

1. Ausströmdüse (1), mit
einem Gehäuse (10), welches mindestens einen Lufteinlass (2) und mindestens einen Luftauslass (3) aufweist, und mit
einer Luftstromverteilungseinrichtung (20), welche im Inneren des Gehäuses (10) dem Lufteinlass (2) nachgeschaltet und dem Luftauslass (3) vorgeschaltet angeordnet ist und durch welche ein durch den Lufteinlass (2) zugeführter Luftstrom (Z) steuerbar richtungs- und anteilsmäßig als abgeführter Luftstrom (A) auf den Luftstromauslass (3) verteilbar ist,
wobei die Luftstromverteilungseinrichtung (20) ein Führungsblatt (21) aufweist, welches zwischen mindestens einer ersten Endstellung (22) und einer zweiten Endstellung (23) derart einstellbar ist,
dass der zugeführte Luftstrom (Z) durch den Luftauslass (3) in der ersten Endstellung (22) des Führungsblatts (21) als abgeführter Luftstrom (A) mit einer ersten Luftstromverteilung und in der zweiten Endstellung (23) des Führungsblatts (21) als abgeführter Luftstrom (A) mit einer zweiten Luftstromverteilung ausströmbar ist
**dadurch gekennzeichnet, dass**
stromaufwärts und unmittelbar vor der Luftstromverteilungseinrichtung (20) eine Überströmschwelle (14) zur Bündelung des zugeführten Luftstroms (Z) auf die Luftstromverteilungseinrichtung (20) hin vorgesehen ist.

2. Ausströmdüse (1) nach Anspruch 1, wobei
am Luftauslass (3) ein Austrittsgitter (15) vorgesehen ist;
der abgeführte Luftstrom (A) mit der ersten Luftstromverteilung über einen ersten Bereich (12a) des Austrittsgitters (15) ausströmbar ist und mit der zweiten Luftstromverteilung über einen zweiten Bereich (12b) des Austrittsgitters (15) ausströmbar ist; und wobei
der erste Bereich und der zweite Bereich unterschiedliche Bereiche des Austrittsgitters (15) sind.

3. Ausströmdüse (1) nach Anspruch 1 oder 2, wobei
das Führungsblatt (21) auf einer Führungsblatt-Drehachse (25) angeordnet und das Führungsblatt (21) durch Verdrehen der Führungsblatt-Drehachse (25) zumindest in die erste Endstellung (22) und die zweite Endstellung (23) verdrehbar oder verschwenkbar ist.

4. Ausströmdüse (1) nach einem der vorangehenden Ansprüche, wobei
das Gehäuse (10) eine Montageseite (11) aufweist und die Führungsblatt-Drehachse (25) derart parallel zur Montageseite (11) angeordnet ist, dass
(a) in der ersten Endstellung (22) das Führungsblatt (21) im Wesentlichen parallel zur Montageseite (11) ausgerichtet ist und der zugeführte Luftstrom (Z) im Wesentlichen parallel zur Montageseite (11) ausströmbar ist und dass
(b) in der zweiten Endstellung (23) das Führungsblatt (21) nicht parallel zur Montageseite (11) ausgerichtet ist und der zugeführte Luftstrom (Z) nicht parallel, sondern in einem von 0° verschiedenen Winkel, insbesondere senkrecht zur Montageseite (11) ausströmbar ist.

5. Ausströmdüse (1) nach einem der vorangehenden Ansprüche, wobei
die Luftstromverteilungseinrichtung (20) mindestens eine Luftstromumlenkung (30) mit einer Mehrzahl von Schaufelblättern (31) aufweist, welche zueinander parallel und beabstandet auf einer gemeinsamen Schaufelblatt-Drehachse (35) angeordnet sind;
die Schaufelblätter (31) in einem spitzen Winkel zu der Drehachse (35) stehen; und wobei
mit einer Drehung der Schaufelblatt-Drehachse (35) mindestens zwischen einer ersten Endstellung und einer zweiten Endstellung (33) verdrehbar oder verschwenkbar sind.

6. Ausströmdüse (1) nach Anspruch 5, wobei
die Schaufelblätter (31) in der ersten Endstellung parallel zu einer Züführrichtung (x, -x) des zugeführten Luftstroms (Z) und in der zweiten Endstellung (33) nicht parallel zur Zuführrichtung (x, -x) des zugeführten Luftstroms (Z) ausgerichtet sind, so dass
in der ersten Endstellung die Schaufelblätter (31) durch den zugeführten Luftstrom (Z) weitestgehend ungehindert passierbar sind und in der zweiten Endstellung (33) der zugeführte Luftstrom (Z) durch die Schaufelblätter (31) - insbesondere in der Ebene (yx) der Montageseite (11) und/oder senkrecht zur Zuführrichtung (x, -x) - seitlich ablenkbar ist.

7. Ausströmdüse (1) nach einem der Ansprüche 5 oder 6, wobei
ein mit der Schaufelblatt-Drehachse (35) gekoppeltes Stellelement (36) zum Verdrehen der Drehachse (35) für die Schaufelblätter (31) vorgesehen ist.

8. Ausströmdüse (1) nach einem der Ansprüche 5 bis 7, wobei
die Schaufelblätter (31) planar und kreis- oder ellipsenförmig ausgebildet sind und in ihrem jeweiligen Mittelpunkt von der Schaufelblatt-Drehachse (35) durchdrungen und mit dieser verbunden sind.

9. Ausströmdüse (1) nach einem der Ansprüche 5 bis 8, wobei
die Luftstromumlenkung (30) mit dem Führungsblatt (21) und insbesondere mit dessen Führungsblatt-Drehachse (25) gekoppelt ist, insbesondere nach Art einer starren Verbindung.

10. Ausströmdüse (1) nach einem der vorangehenden Ansprüche, wobei
zwei oder mehr - insbesondere voneinander unabhängig betätig- und bewegbare - Luftstromumlenkungen (30) vorgesehen sind.

11. Ausströmdüse (1) nach einem der vorangehenden Ansprüche, wobei
das Austrittsgitter (15) eine Mehrzahl von Lamellen (16) aufweist, welche insbesondere in einem der Montageseite (11) des Gehäuses (10) gegenüberliegenden Bereich (12) und/oder in Seitenbereichen des Gehäuses (10) ausgebildet sind;
die Lamellen (16) in dem ersten und dem zweiten Bereich des Au strittsgitters (15) vorgesehen sind.

12. Ausströmdüse (1) nach Anspruch 11, wobei
die Lamellen (16) in einem als erster Bereich dienenden, dem Lufteinlass (2) und/oder der Luftstromverteilungseinrichtung (20) näher gelegenen Bereich (12a) in Relation zur Montageseite (11) steiler und in einem als zweiter Bereich dienenden, dem Lufteinlass (2) und/oder der Luftverteilungseinrichtung (20) weiter entfernten Bereich (12b) in Relation zur Montageseite (11) flacher ausgerichtet sind.

13. Luftstromverteilungsvorrichtung (100),
mit einem Luftführungsgehäuse (101), welches mindestens einen Luftauslass (103) aufweiset,
wobei am Luftauslass (103) eine Ausströmdüse (1) nach einem der Ansprüche 1 bis 12 mit einem Lufteinlass (2) angebracht ist.

## Claims

1. An outflow nozzle (1), comprising
a housing (10) which includes at least one air inlet (2) and at least one air outlet (3), und comprising
an air flow distribution device (20) which is arranged inside the housing (10) so as to be connected downstream of the air inlet (2) and upstream of the air outlet (3) and by which an air flow (Z) supplied through the air inlet (2) can be distributed in a controllable manner in terms of direction and proportion to the air flow outlet (3) as a discharged air flow (A),
the air flow distribution device (20) including a guide blade (21) which is adjustable between at least a first end position (22) and a second end position (23) such
that the supplied air flow (Z) is adapted to flow out through the air outlet (3) as the discharged air flow (A) with a first air flow distribution in the first end position (22) of the guide blade (21) and as the discharged air flow (A) with a second air flow distribution in the second end position (23) of the guide blade (21),
**characterized in that**
an overflow threshold (14) for concentrating the supplied air flow (Z) towards the air flow distribution device (20) is provided upstream of and immediately in front of the air flow distribution device (20).

2. The outflow nozzle (1) according to claim 1, wherein
an exit grid (15) is provided at the air outlet (3);
the discharged air flow (A) with the first air flow distribution is adapted to flow out via a first area (12a) of the exit grid (15) and that with the second air flow distribution is adapted to flow out via a second area (12b) of the exit grid (15); and wherein
the first area and the second area are different areas of the exit grid (15).

3. The outflow nozzle (1) according to claim 1 or 2, wherein
the guide blade (21) is arranged on a guide blade axis of rotation (25) and the guide blade (21) can be rotated or pivoted at least to the first end position (22) and the second end position (23) by rotating the guide blade axis of rotation (25).

4. The outflow nozzle (1) according to any of the preceding claims, wherein
the housing (10) has a mounting side (11) and the guide blade axis of rotation (25) is arranged parallel to the mounting side (11) such that
(a) in the first end position (22), the guide blade (21) is oriented substantially parallel to the mounting side (11) and the supplied air flow (Z) is adapted to flow out substantially parallel to the mounting side (11), and that
(b) in the second end position (23), the guide blade (21) is not oriented parallel to the mounting side (11) and the supplied air flow (Z) is adapted to flow out at an angle other than 0 degrees, in particular perpendicularly to the mounting side (11), rather than parallel.

5. The outflow nozzle (1) according to any of the preceding claims, wherein
the air flow distribution device (20) includes at least one air flow deflection means (30) having a plurality of vane blades (31) which are arranged parallel to one another and spaced apart on a shared vane blade axis of rotation (35);
the vane blades (31) are positioned at an acute angle to the axis of rotation (35); and
can be rotated or pivoted at least between a first end position and a second end position (33) by a rotation of the vane blade axis of rotation (35).

6. The outflow nozzle (1) according to claim 5, wherein
in the first end position, the vane blades (31) are oriented parallel to a supply direction (x, -x) of the supplied air flow (Z) and, in the second end position (33), they are not oriented parallel to the supply direction (x, -x) of the supplied air flow (Z), so that
in the first end position, the supplied air flow (Z) can pass the vane blades (31) largely unhindered and, in the second end position (33), the supplied air flow (Z) is laterally deflectable by the vane blades (31), in particular in the plane (yx) of the mounting side (11) and/or perpendicularly to the supply direction (x, -x).

7. The outflow nozzle (1) according to either of claims 5 or 6, wherein
an adjusting element (36) coupled to the vane blade axis of rotation (35) is provided for rotating the axis of rotation (35) for the vane blades (31).

8. The outflow nozzle (1) according to any of claims 5 to 7, wherein
the vane blades (31) are configured to be planar and circular or elliptical in shape and are penetrated at their respective centers by the vane blade axis of rotation (35) and are connected thereto.

9. The outflow nozzle (1) according to any of claims 5 to 8, wherein
the air flow deflection means (30) is coupled to the guide blade (21) and in particular to the guide blade axis of rotation (25) thereof, in particular in the manner of a rigid connection.

10. The outflow nozzle (1) according to any of the preceding claims, wherein
two or more air flow deflection means (30) are provided, which in particular are adapted to be actuated and moved independently of each other.

11. The outflow nozzle (1) according to any of the preceding claims, wherein
the exit grid (15) includes a plurality of slats (16) which are formed in particular in an area (12) opposite to the mounting side (11) of the housing (10) and/or in side areas of the housing (10);
the slats (16) are provided in the first and second areas of the exit grid (15).

12. The outflow nozzle (1) according to claim 11, wherein
the slats (16) are oriented more steeply in relation to the mounting side (11) in an area (12a) that serves as the first area and is located closer to the air inlet (2) and/or the air flow distribution device (20), and are oriented more flatly in relation to the mounting side (11) in an area (12b) that serves as the second area and is farther away from the air inlet (2) and/or the air flow distribution device (20).

13. An air flow distribution device (100), comprising
an air guide housing (101) which includes at least one air outlet (103),
wherein an outflow nozzle (1) according to any of claims 1 to 12 is attached by an air inlet (2) to the air outlet (103).

## Revendications

1. Buse d'échappement (1), comportant
un boîtier (10) qui présente au moins une entrée d'air (2) et au moins une sortie d'air (3), et comportant
un dispositif de distribution de flux d'air (20) qui est agencé en aval de l'entrée d'air (2) et en amont de la sortie d'air (3) à l'intérieur du boîtier (10) et au moyen duquel un flux d'air (Z) amené à travers l'entrée d'air (2) peut être distribué de manière contrôlable en termes de direction et de part vers la sortie de flux d'air (3) sous forme de flux d'air évacué (A),
le dispositif de distribution de flux d'air (20) présentant une pale de guidage (21) qui est apte à être ajustée entre au moins une première position finale (22) et une deuxième position finale (23) de telle sorte que
le flux d'air amené (Z) est apte à s'échapper à travers la sortie d'air (3) sous forme de flux d'air évacué (A) avec une première distribution de flux d'air dans la première position finale (22) de la pale de guidage (21), et sous forme de flux d'air évacué (A) avec une deuxième distribution de flux d'air dans la deuxième position finale (23) de la pale de guidage (21),
**caractérisé en ce que**
il est prévu en amont du dispositif de distribution de flux d'air (20) et directement devant celui-ci un seuil de trop-plein (14) pour la concentration du flux d'air amené (Z) sur le dispositif de distribution de flux d'air (20).

2. Buse d'échappement (1) selon la revendication 1,
une grille de décharge (15) étant prévue à la sortie d'air (3),
le flux d'air évacué (A) avec la première distribution de flux d'air étant apte à s'échapper par une première zone (12a) de la grille de décharge (15), et celui avec la deuxième distribution de flux d'air par une deuxième zone (12b) de la grille de décharge (15), et
la première zone et la deuxième zone étant des zones différentes de la grille de décharge (15).

3. Buse d'échappement (1) selon la revendication 1 ou 2,
la pale de guidage (21) étant agencée sur un axe de rotation (25) de pale de guidage, et la pale de guidage (21) étant apte à être tournée ou pivotée au moins dans la première position finale (22) et dans la deuxième position finale (23) par une rotation de l'axe de rotation (25) de la pale de guidage.

4. Buse d'échappement (1) selon l'une des revendications précédentes,
le boîtier (10) présentant un côté de montage (11) et l'axe de rotation (25) de la pale de guidage étant agencé parallèlement au côté de montage (11) de manière à ce que
(a) dans la première position finale (22), la pale de guidage (21) est orientée de manière sensiblement parallèle au côté de montage (11) et le flux d'air amené (Z) est apte à s'échapper de manière sensiblement parallèle par rapport au côté de montage (11), et à ce que
(b) dans la deuxième position finale (23), la pale de guidage (21) n'est pas orientée de manière parallèle au côté de montage (11) et le flux d'air amené (Z) n'est pas apte à s'échapper de manière parallèle mais sous un angle différent de 0°, en particulier perpendiculairement au côté de montage (11).

5. Buse d'échappement (1) selon l'une des revendications précédentes,
le dispositif de distribution de flux d'air (20) présentant au moins un moyen de déviation de flux d'air (30) qui comporte une pluralité de pales (31) qui sont agencées de manière parallèle et à distance les unes par rapport aux autres sur un axe de rotation de pale (35) commun,
les pales (31) étant agencées sous un angle aigu par rapport à l'axe de rotation (35) et
étant aptes à être tournées ou pivotées au moins entre une première position finale et une deuxième position finale (33) par une rotation de l'axe de rotation de pale (35).

6. Buse d'échappement (1) selon la revendication 5,
les pales (31) étant orientées de manière parallèle à un sens d'amenée (x, -x) du flux d'air amené (Z) dans la première position finale, et n'étant pas orientées de manière parallèle au sens d'amenée (x, -x) du flux d'air amené (Z) dans la deuxième position finale (33), de sorte que
dans la première position finale, le flux d'air amené (Z) peut en majeure partie passer les pales (31) sans obstacles et dans la deuxième position finale (33), le flux d'air amené (Z) est apte à être dévié latéralement par les pales (31) - en particulier dans le plan (yx) du côté de montage (11) et/ou perpendiculairement au sens d'amenée (x, -x).

7. Buse d'échappement (1) selon l'une des revendications 5 ou 6,
un élément d'ajustage (36) couplé à l'axe de rotation de pale (35) étant prévu pour la rotation de l'axe de rotation (35) pour les pales (31).

8. Buse d'échappement (1) selon l'une des revendications 5 à 7,
les pales (31) étant réalisées de manière planaire et circulaire ou elliptique, étant traversées dans leur centre respectif par l'axe de rotation de pale (35) et étant reliées à celui-ci.

9. Buse d'échappement (1) selon l'une des revendications 5 à 8,
le moyen de déviation de flux d'air (30) étant couplé à la pale de guidage (21) et en particulier à son axe de rotation (25) de pale de guidage, en particulier à la manière d'un raccordement rigide.

10. Buse d'échappement (1) selon l'une des revendications précédentes,
deux moyens de déviation de flux d'air (30) ou plus étant prévus, lesquels sont en particulier aptes à être actionnés et déplacés indépendamment l'un de l'autre.

11. Buse d'échappement (1) selon l'une des revendications précédentes,
la grille de décharge (15) présentant une pluralité de lamelles (16) qui sont en particulier réalisées dans une zone (12) opposée au côté de montage (11) du boîtier (10) et/ou dans des zones latérales du boîtier (10),
les lamelles (16) étant prévues dans la première et la deuxième zone de la grille de décharge (15).

12. Buse d'échappement (1) selon la revendication 11,
les lamelles (16) étant orientées plus en pente par rapport au côté de montage (11) dans une zone (12a) qui sert de première zone et qui est agencée plus prés de l'entrée d'air (2) et/ou du dispositif de distribution de flux d'air (20), et étant orientées de manière plus plate par rapport au côté de montage (11) dans une zone (12b) qui sert de deuxième zone et qui est plus éloignée de l'entrée d'air (2) et/ou du dispositif de distribution de flux d'air (20).

13. Dispositif de distribution de flux d'air (100),
comportant un boîtier de guidage d'air (101) qui présente au moins une sortie d'air (103),
une buse d'échappement (1) selon l'une des revendications 1 à 12 qui présente une entrée d'air (2) étant montée sur la sortie d'air (103).
